# EUROPEAN PATENT APPLICATION

(11) **EP 4 818 276 A1**
(43) Date of publication of application: **07.10.2026**
(21) Application number: 26165996.5
(22) Date of filing: 19.03.2026
(51) Int. Cl.: C09D 11/322, C09D 11/38

(54) **AQUEOUS INK FOR INKJET RECORDING, INKJET RECORDING APPARATUS, AND INKJET RECORDING METHOD**

(30) Priority: 31.03.2025 JP 2025060024; 13.02.2026 JP 2026021730
(71) Applicant: BROTHER KOGYO KABUSHIKI KAISHA, Aichi-ken 467-8561 (JP)
(72) Inventor: KAWABATA, Issei, Nagoya, 467-8562 (JP); TSUZAKA, Yuka, Nagoya, 467-8562 (JP); NISHIDA, Satoshi, Nagoya, 467-8562 (JP); ISOGAI, Masato, Nagoya, 467-8562 (JP)
(74) Representative: Kuhnen & Wacker Patent- und Rechtsanwaltsbüro PartG mbB

(57) **Abstract**

An aqueous ink for inkjet recording includes water, phycocyanin, and a water-soluble organic solvent. The water-soluble organic solvent has a log P of 0.2000 or less. The log P is defined as a common logarithm of (octanol / water partition coefficient P).

## Description

### TECHNICAL FIELD

The disclosure herein provides a technology relating to an aqueous ink for inkjet recording, an inkjet recording apparatus, and an inkjet recording method.

### BACKGROUND ART

JP Patent Application Publication No. 2022-107267 describes an inkjet ink including only petroleum-based colorants.

### DESCRIPTION

Recently, in view of a decarbonization perspective, it is desirable to replace petroleum-based raw materials with plant derived natural raw materials for a blue colorant in an inkjet ink.

Among several natural blue colorants, phycocyanin, a water-soluble pigment, is particularly noted for its vivid blue color. However, an ejection stability of an inkjet head tends to decrease when ejecting inkjet ink containing phycocyanin from the inkjet head.

Therefore, an object of the present disclosure is to provide an aqueous ink for inkjet recording, an inkjet recording apparatus, and an inkjet recording method, each of which uses phycocyanin as a colorant and exhibits excellent ejection stability from nozzles of the inkjet head.

In order to achieve the above object, an aqueous ink for inkjet recording includes water, phycocyanin, and a water-soluble organic solvent. The water-soluble organic solvent has a log P of 0.2000 or less. The log P is defined as a common logarithm of (octanol/water partition coefficient P).

An inkjet recording apparatus includes an inkjet head, in which the inkjet head is configured to eject the aqueous ink according to the present disclosure toward a medium.

An inkjet recording method includes ejecting the aqueous ink according to the present disclosure from an inkjet head toward a medium to record an image on the medium.

With the aqueous ink for inkjet recording according to the present disclosure, it is possible to expel the ejection stability from nozzles of the aqueous ink for inkjet recording by using phycocyanin as a colorant.
FIG.1 is a schematic perspective view of an example of an inkjet recording apparatus.

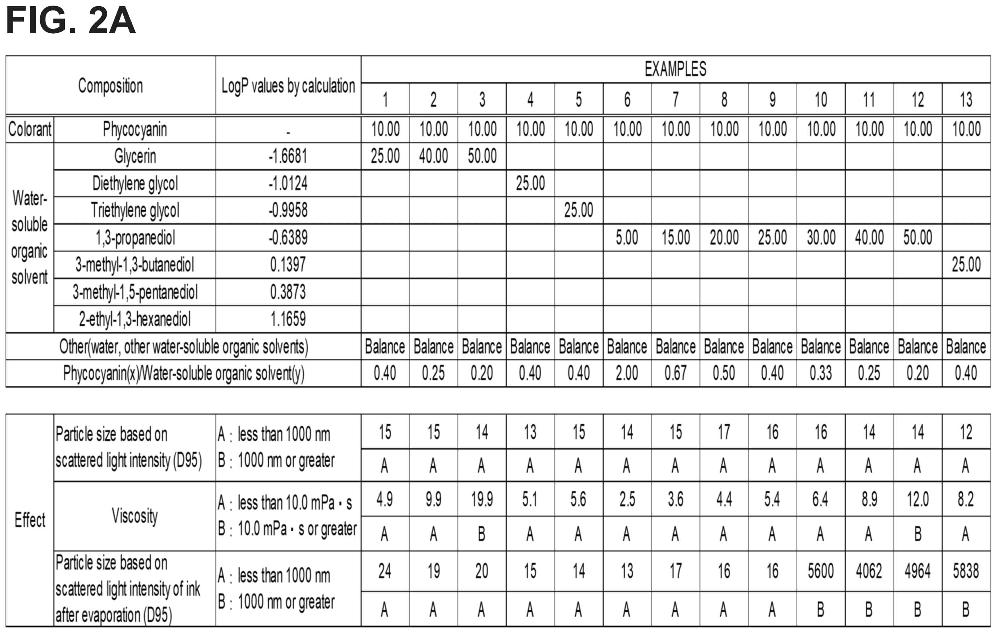

FIG. 2A is a table 1 that indicates aqueous ink compositions and evaluation results for Examples 1 through 13.

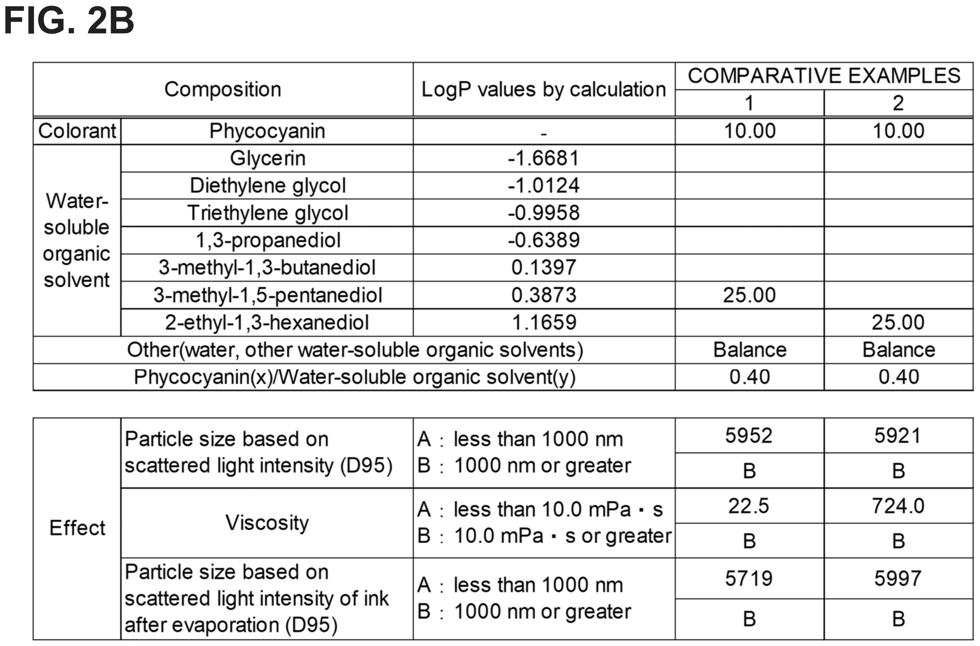

FIG. 2B is a table 1 that indicates aqueous ink compositions and evaluation results for Comparative Examples 1 and 2.

In the present disclosure, when multiple upper and/or lower limits are exemplified, any combination of the exemplified upper and lower limits may be used as the numerical range.

In the present disclosure, values of "weight % (hereinafter, referred to "wt%")", "ratio (x/y)" are indicated to the second decimal place and rounded at the third decimal place. "Log P" is indicated to the forth decimal place and rounded at the fifth decimal place. "viscosity" is indicated to one decimal place and rounded at the second decimal place. "Particle size based on scattered light intensity" is indicated to zero decimal places and rounded at the first decimal place.

Any mechanisms described in the following embodiments and examples are merely hypothetical and are not intended to limit the described mechanisms.

### (Aqueous Ink for Inkjet Recording)

The aqueous ink for inkjet recording (hereinafter sometimes referred to as "aqueous ink" or "ink") of the present disclosure is described below.

The aqueous ink of the present disclosure includes water, a colorant, and a water-soluble organic solvent. The water may be ion-exchanged water, purified water, or the like.

An amount of the water in a total weight of the aqueous ink may be 10.00 wt% or greater and 90.00 wt% or less, or 20.00 wt% or greater and 80.00 wt% or less. The amount of the water may also be the balance excluding other components.

The aqueous ink of the present disclosure is a cyan ink containing at least the phycocyanin as a colorant. The aqueous ink of the present disclosure may be a cyan ink containing only the phycocyanin as a colorant. The phycocyanin is a natural pigment-protein. The phycocyanin includes phycocyanobilin as a pigment. The phycocyanin includes a hexameric disc formed by the phycocyanobilin molecules. The hexameric disc is formed by combining two trimeric discs. Each trimeric disc includes one molecule of phycocyanobilin bound to α-subunit and two molecules of phycocyanobilin bound to β-subunit. Furthermore, the hexameric disk binds to a specific protein to form a rod-like structure, resulting in a water-soluble large pigment-protein complex.

The aqueous ink of the present disclosure may further include, in addition to phycocyanin, at least one blue dye selected from the group consisting of gardenia blue pigment, indian indigo, and clerodendrum pigment. The aqueous ink may also include, in addition to phycocyanin, at least one red dye selected from the group consisting of gardenia red pigment, monascus, carthamus red pigment, cochineal pigment, lac dye, madder dye, capsicum pigment, annatto pigment, red radish pigment, red cabbage pigment, red rice pigment, elderberry pigment, cowberry pigment, gooseberry pigment, cranberry pigment, salmonberry pigment, perilla pigment, swainsonine blueberry pigment, strawberry pigment, dark sweet cherry pigment, cherry pigment, hibiscus pigment, huckleberry pigment, grape juice pigment, grape skin pigment, blackcurrant pigment, blackberry pigment, blueberry pigment, plum pigment, whortleberry pigment, boysenberry pigment, mulberry pigment, purple sweet potato pigment, purple corn pigment, purple yam pigment, raspberry pigment, redcurrant pigment, loganberry pigment, beet red pigment, and monascus red pigment. Furthermore, the aqueous ink may include, in addition to phycocyanin, at least one yellow dye selected from the group consisting of gardenia yellow pigment, safflower yellow pigment, turmeric pigment, and monascus yellow pigment. In such cases, the aqueous ink may be a purple or green ink.

The lower limit of the amount of the phycocyanin in the total weight of the aqueous ink may be 5.00 wt% or greater or 10.00 wt% or greater. The upper limit of the amount of the phycocyanin may be 15.00 wt% or less or 10.00 wt% or less. The amount may be 5.00 wt% or greater and 15.00 wt% or less, 5.00 wt% or greater and 10.00 wt% or less, or 10.00 wt% or greater and 15.00 wt% or less.

The aqueous ink of the present disclosure may also include petroleum-derived pigments in addition to phycocyanin as colorants. By including both phycocyanin and petroleum-derived pigments as colorants, the amount of petroleum-derived pigments in the aqueous ink is less than the amount of petroleum-derived pigments in the aqueous ink that contains only petroleum-derived pigments.

Examples of the pigment may include carbon black, inorganic pigments, and organic pigments. Examples of carbon black include furnace black, lamp black, acetylene black, and channel black. Examples of inorganic pigments include titanium oxide, iron oxide-based inorganic pigments, and carbon black-based inorganic pigments. Examples of organic pigments include: azo pigments such as azo lakes, insoluble azo pigments, condensed azo pigments, and chelate azo pigments; polycyclic pigments such as phthalocyanine pigments, perylene pigments, perinone pigments, anthraquinone pigments, quinacridone pigments, dioxazine pigments, thioindigo pigments, isoindolinone pigments and quinophthalone pigments, dye lake pigments such as basic dye-type lake pigments and acid dye-type lake pigments; nitro pigments; nitroso pigments; aniline black daylight fluorescent pigments; and the like. Other pigments dispersible in an aqueous phase may be used as long as they are dispersible in an aqueous phase. Examples of the other pigments may include: C.I. Pigment White 1, 4, 5, 6, 7, 18, 19, 20, 21, 22, 23, 24, 25, 26, 27, and 28; C.I. Pigment Black 1, 6, and 7; C.I. Pigment Yellow 1, 2, 3, 12, 13, 14, 15, 16, 17, 55, 74, 78, 150, 151, 154, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of these pigments.

The pigment may be dispersed in a solvent with a resin dispersant (also referred to as a resin-dispersed pigment). The resin dispersant may be a conventionally known polymer dispersant (also referred to as a pigment dispersing resin or resin dispersant). In the aqueous ink of the present disclosure, the pigment may be encapsulated by a polymer. The resin dispersant may include one or both of methacrylic acid and acrylic acid as a monomer, and commercially available products may be used. The resin dispersant may include: a hydrophobic monomer such as styrene, styrene derivatives, vinyl naphthalene, vinyl naphthalene derivatives, and aliphatic alcohol esters of α,β-ethylenically unsaturated carboxylic acids; a block copolymer composed of two or more monomers selected from acrylic acid, acrylic acid derivatives, maleic acid, maleic acid derivatives, itaconic acid, itaconic acid derivatives, fumaric acid, and fumaric acid derivatives; a graft copolymer composed of two or more monomers selected from acrylic acid, acrylic acid derivatives, maleic acid, maleic acid derivatives, itaconic acid, itaconic acid derivatives, fumaric acid, and fumaric acid derivatives; a random copolymer composed of two or more monomers selected from acrylic acid, acrylic acid derivatives, maleic acid, maleic acid derivatives, itaconic acid, itaconic acid derivatives, fumaric acid, and fumaric acid derivatives; a salt of the hydrophobic monomer; a salt of the block copolymer; a salt of the graft copolymer; a salt of the random copolymer; and the like. Examples of commercially available products include "Joncryl^{®} 611," "Joncryl 60," "Joncryl 586," "Joncryl 687," "Joncryl 63," and "Joncryl HPD296" from BASF corporation; "Disperbyk 190" and "Disperbyk 191" manufactured by BYK-Chemie; and "Solsperse 20000" and "Solsperse 27000" from Lubrizol Corporation and others.

The method for dispersing the pigment using the resin-dispersed pigment includes, for example, dispersing the pigment with a dispersing device. The dispersing device is not particularly limited as long as it is a common dispersing apparatus, such as a ball mill, roll mill, or sand mill (e.g., high-speed type).

The pigment may be a self-dispersing pigment. The self-dispersing pigment is capable of being dispersed in water without a dispersant due to chemical bonding of at least one of hydrophilic functional groups such as carbonyl, hydroxyl, carboxylic acid, sulfonic acid, and phosphoric acid groups and a salt of the hydrophilic functional group to a pigment particle, either directly or through another group. The self-dispersing pigment may be prepared by processes disclosed in JP H08-3498 A, JP 2000-513396 A, JP 2008-524400 A, JP 2009-515007 A, and JP 2011-515535 A. Both inorganic and organic pigments may be used as raw materials for the self-dispersing pigment. Examples of pigment suitable for performing the process include carbon black, and the like, such as "MA8," "MA100," and the like, manufactured by Mitsubishi Chemical Co., Ltd. The self-dispersing pigment may be used commercially available products. Examples of the commercially available products include: "CAB-O-JET^{®} 200", "CAB-O-JET 250C", "CAB-O-JET 260M", "CAB-O-JET 270Y", "CAB-O-JET 300", "CAB-O-JET 400", "CAB-O-JET 450C", "CAB-O-JET 465M", and "CAB-O-JET 470Y" from Cabot Corporation; "BONJET^{®} BLACK CW-2" and "BONJET BLACK CW-3" from Orient Chemical Industries Co., Ltd.; "LIOJET^{®} WD BLACK 002C" from artience Co., Ltd.; and the like.

The aqueous ink of the present disclosure may include a combination of the phycocyanin and petroleum-derived dyes as the colorant. By including both the phycocyanin and the petroleum-derived dye, the amount of the petroleum-derived dye in the aqueous ink is less than capable of being reduced compared to inks containing only the amount of petroleum-derived dye in the aqueous ink that contains only petroleum-derived dye.

The petroleum-derived dye is not particularly limited and may include direct dyes, acid dyes, basic dyes, and reactive dyes. Examples of the petroleum-derived dye may include C.I. Direct Black, C.I. Direct Blue, C.I. Direct Red, C.I. Direct Yellow, C.I. Direct Orange, C.I. Direct Violet, C.I. Direct Brown, C.I. Direct Green, C.I. Acid Black, C.I. Acid Blue, C.I. Acid Red, C.I. Acid Yellow, C.I. Acid Orange, C.I. Acid Violet, C.I. Basic Black, C.I. Basic Blue, C.I. Basic Red, C.I. Basic Violet, and C.I. Food Black. Examples of the C.I. Direct Black may include C.I. Direct Black 17, 19, 32, 51, 71, 108, 146, 154, and 168. Examples of the C.I. Direct Blue may include C.I. Direct Blue 6, 22, 25, 71, 86, 90, 106, and 199. Examples of the C.I. Direct Red may include C.I. Direct Red 1, 4, 17, 28, 83, and 227. Examples of the C.I. Direct Yellow may include C.I. Direct Yellow 12, 24, 26, 86, 98, 132, 142, and 173. Examples of the C.I. Direct Orange may include C.I. Direct Orange 34, 39, 44, 46, and 60. Examples of the C.I. Direct Violet may include C.I. Direct Violet 47 and 48. Examples of the C.I. Direct Brown may include C.I. Direct Brown 109. Examples of the C.I. Direct Green may include C.I. Direct Green 59. Examples of the C.I. Acid Black may include C.I. Acid Black 2, 7, 24, 26, 31, 52, 63, 112, and 118. Examples of the C.I. Acid Blue may include C.I. Acid Blue 9, 22, 40, 59, 90, 93, 102, 104, 117, 120, 167, 229, and 234. Examples of the C.I. Acid Red may include C.I. Acid Red 1, 6, 32, 37, 51, 52, 80, 85, 87, 92, 94, 115, 180, 256, 289, 315, and 317. Examples of the C.I. Acid Yellow may include C.I. Acid Yellow 11, 17, 23, 25, 29, 42, 61, and 71. Examples of the C.I. Acid Orange may include C.I. Acid Orange 7 and 19. Examples of the C.I. Acid Violet may include C.I. Acid Violet 49. Examples of the C.I. Basic Black may include C.I. Basic Black 2. Examples of the C.I. Basic Blue may include C.I. Basic Blue 1, 3, 5, 7, 9, 24, 25, 26, 28, and 29. Examples of the C.I. Basic Red may include C.I. Basic Red 1, 2, 9, 12, 13, 14, and 37. Examples of the C.I. Basic Violet may include C.I. Basic Violet 7, 14, and 27. Examples of the C.I. Food Black may include C.I. Food Black 1 and 2.

The aqueous ink of the present disclosure may include a water-soluble organic solvent having the log P, which is a common logarithm of (octanol/water partition coefficient P), of 0.2000 or less. The upper limit of the log P may be 0.1000 or less, 0.0000 or less, -0.5000 or less, -1.0000 or less, -1.5000 or less, or less than -1.5000. The lower limit of the log P may be - 2.0000 or greater, -1.5000 or greater, -1.0000 or greater, -0.5000 or greater, or 0.0000 or greater. The log P may be -2.0000 or greater and 2.0000 or less, -1.5000 or greater and 2.0000 or less, or -1.5000 or greater and -0.5000 or less.

The log P represents an index indicating an affinity of a chemical substance for water. A positive log P with a large absolute value indicates higher hydrophobicity, whereas a negative log P with a large absolute value indicates lower hydrophilicity. As the aqueous ink contains a water-soluble organic solvent having the negative log P and the large absolute value, the phycocyanin, which is a water-soluble protein, is stabilized by selective hydration with the water-soluble organic solvent, and association between the phycocyanins is relaxed. As the aqueous ink contains a water-soluble organic solvent having the positive log P and the large absolute value, the water-soluble organic solvent interacts with a hydrophobic side chain of the phycocyanin to modify the phycocyanin, thereby promoting association between the phycocyanins. Therefore, as a water-soluble organic solvent having the negative log P and the large absolute value is contained in the aqueous ink, the association is moderated by an effect of the water-soluble organic solvent, and the ejection stability of the aqueous ink from nozzles of the inkjet head is improved. Accordingly, it is preferable that the log P is a negative value with a large absolute value, and the lower limit is not particularly limited.

The water-soluble organic solvent may include glycerin, 1,3-propanediol, 3-methyl-1,3-butanediol, diethylene glycol, triethylene glycol, 2-ethyl-1,3-hexanediol, and 3-methyl-1,5-pentanediol, but are not limited to these.

The log P may be an experimental value or a calculated value. The log P may be calculated by using a method disclosed in Wildman, Scott A., and Gordon M. Crippen (1999). Prediction of physicochemical parameters by atomic contributions, Journal of Chemical Information and Computer Sciences, Vol. 39, Issue 5, pp. 868 to 873, DOI: 10.1021/ci990307l.

The water-soluble organic solvent may include, in addition to a water-soluble organic solvent having the log P of 0.2000 or less, other water-soluble organic solvents having the log P exceeding 0.2000.

The aqueous ink of the present disclosure including other water-soluble organic solvents may mitigate the aggregation between phycocyanin molecules as long as the aqueous ink includes and a water-soluble organic solvent having the log P of 0.2000 or less.

The lower limit of the amount of the water-soluble organic solvent in the total weight of the aqueous ink may be 1.00 wt% or greater, 5.00 wt% or greater, 10.00 wt% or greater, 15.00 wt% or greater, or 25.00 wt% or greater. The upper limit of the amount of the water-soluble organic solvent in the total weight of the aqueous ink may be 75.00 wt% or less, 50.00 wt% or less, 45.00 wt% or less, 40.00 wt% or less, or 30.00 wt% or less. The amount of the water-soluble organic solvent in the total weight of the aqueous ink may be 1.00 wt% or greater and 75.00 wt% or less, 5.00 wt% or greater and 50.00 wt% or less, 25.00 wt% or greater and 40.00 wt% or less, or 25.00 wt% or greater and 30.00 wt% or less.

The lower limit of a ratio (x/y) of the amount of the phycocyanin (x) to the water-soluble organic solvent (y) may be 0.10 or greater, 0.20 or greater, 0.25 or greater, or 0.30 or greater. The upper limit of the ratio (x/y) may be 5.00 or less, 2.00 or less, 1.00 or less, 0.70 or less, 0.50 or less, or 0.40 or less. The ratio (x/y) may be 0.20 or greater and 2.00 or less or 0.25 or greater and 2.00 or less.

The upper limit of the viscosity of the aqueous ink at 25°C may be 10.0 mPa·s or less, 9.0 mPa·s or less, 8.0 mPa·s or less, 7.0 mPa·s or less, or 6.0 mPa·s or less. The lower limit of the viscosity of the aqueous ink at 25°C is not particularly limited. The lower limit of the viscosity of the aqueous ink at 25°C may be 1.0 mPa·s or greater or 2.0 mPa·s or greater. The viscosity may be measured by the method described below.

The reason for setting the viscosity of the aqueous ink at 25°C to less than 10.0 mPa·s is as follows. From the viewpoint of reducing environmental impact, it is preferable to use an aqueous ink as an ink for inkjet recording. In addition, when an ink is ejected from an inkjet head included in an inkjet recording apparatus, as the viscosity of the ink is lower, the ejection energy at the time of ink ejection is lower. Therefore, among the aqueous inks, it is more preferable to use an aqueous ink having a low viscosity from the viewpoint of reducing the environmental impact. Here, an appropriate viscosity of the inkjet head for ejecting the aqueous ink is often set to be less than 10.0 MPa·s. When the ink having the low viscosity is ejected from an inkjet head having an appropriate viscosity of the ink of 10.0 MPa·s or greater, ink droplets may not fly stably in a space. Therefore, the viscosity at 25 ° C of the aqueous ink of the present disclosure is preferably less than 10.0 MPa·s from the viewpoint of reducing the environmental impact and the viewpoint of the appropriate viscosity of the inkjet head.

The particle size based on scattered light intensity of particles in the aqueous ink of the present disclosure may be less than 1000nm, 500 nm or less, 100 nm or less, 50 nm or less, 20 nm or less, 18 nm or less, 16 nm or less, 15 nm or less, or 14 nm or less. The particle size based on scattered light intensity may be a particle diameter at which 95% of the particles are equal to or smaller than the diameter based on scattered light intensity in a cumulative particle size distribution (D95). The particle size based on scattered light intensity may be measured by the method described below.

The aqueous ink of the present disclosure may further include water-soluble organic solvents having the log P exceeding 0.2000, surfactants, pH adjusters, viscosity modifiers, preservatives, and anti-mold agents. The pH adjusters, surfactants, viscosity modifiers, and anti-mold agents may be plant-derived. The colorants, penetrants, preservatives, pH adjusters, surfactants, viscosity modifiers, and anti-mold agents in the aqueous ink of the present disclosure may be plant-derived.

### (Inkjet Recording Apparatus and Inkjet Recording Method)

Next, an inkjet recording apparatus and method of the present disclosure are described.

The inkjet recording apparatus of the present disclosure includes an inkjet head, and the inkjet head ejects the aqueous ink of the present disclosure toward a medium.

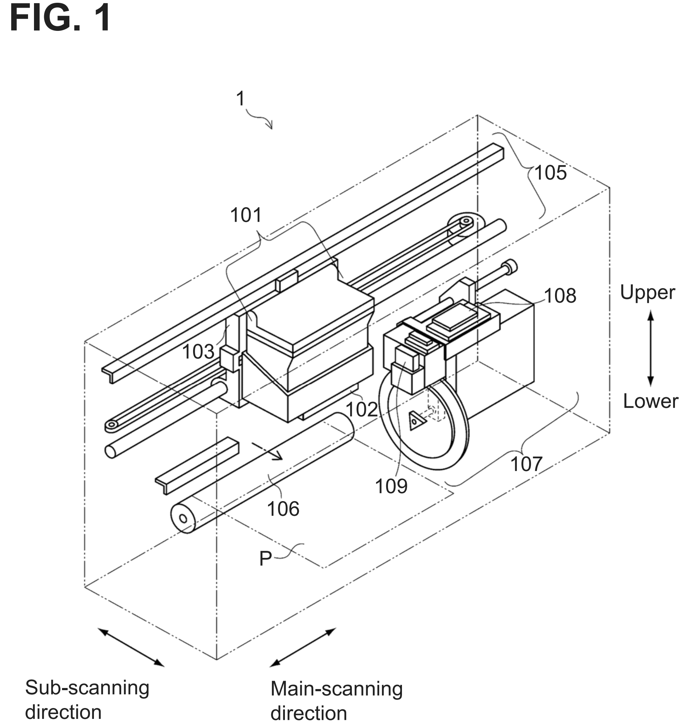

FIG. 1 shows an example configuration of the inkjet recording apparatus. As shown, an inkjet recording apparatus 1 includes an ink cartridge 101, an inkjet head 102, a carriage 103, a drive unit 105, a platen roller 106, a purge device 107, a cap 108 and a wiper member 109. Although not shown, the ink cartridge 101 and the inkjet head 102 may be connected via the ink flow path, and the aqueous ink stored in the ink cartridge 101 may be supplied to the inkjet head 102 through the ink flow path. The inkjet head 102 may eject the aqueous ink to a medium P. Examples of the medium P may include plain paper and glossy paper.

The ink cartridge 101 stores the aqueous ink. A housing of the ink cartridge 101 for storing the aqueous ink may be conventionally known.

The inkjet head 102 ejects ink toward the medium P. The ink cartridge 101 and the inkjet head 102 are mounted on the carriage 103. The drive unit 105 reciprocates the carriage 103 in the main scanning direction. During recording an image on the medium P, the inkjet head 102 ejects ink while the carriage 103 reciprocates in the main scanning direction to record on the image on the medium P. The drive unit 105 may be conventionally known (for example, see JP2008-246821 A). The platen roller 106 extends in the main scanning direction.

The purge device 107 suctions defective ink containing bubbles accumulated inside the inkjet head 102. The purge device 107 may be conventionally known (for example, see JP2008-246821 A).

As shown in FIG. 1, the wiper member 109 is disposed between the purge device 107 and the platen roller 106 in the main scanning direction and is disposed adjacent to the purge device 107. The wiper member 109 is a rubber blade that wipes a nozzle surface of the inkjet head 102 as the carriage 103 moves.

In FIG. 1, the cap 108 covers the nozzles on the nozzle surface when the cap 108 contacts the nozzle surface. After recording is completed, the carriage 103 moves to a standby position where the inkjet head 102 faces the cap 108. Then, the cap 108 approaches the inkjet head 102, contacts the nozzle surface, and covers the nozzles on the nozzle surface.

While the ink cartridge 101 is mounted on the carriage 103 together with the inkjet head 102 in the inkjet recording apparatus 1, the ink cartridge 101 may be placed within the inkjet recording apparatus 1 without being mounted on the carriage 103. Specifically, the inkjet head 102 mounted on the carriage 103 may be fluidly connected to the ink cartridge 101 via the ink flow path such as a tube, whereby ink is supplied from the ink cartridge 101 to the inkjet head 102 through the tube. Instead of using the replaceable ink cartridge 101, the inkjet recording apparatus 1 may include a fixed ink tank with a filling port such that a user may insert an ink bottle into the filling port of the ink tank to replenish ink from the ink bottle to the ink tank.

The recording using the inkjet recording apparatus 1 is carried out as follows. First, the medium P is supplied from a rear or bottom of the inkjet recording apparatus 1. The medium P is conveyed to an area facing the inkjet head 102 by the platen roller 106. The image is recorded on the medium P conveyed by the platen roller 106 by ejecting the aqueous ink from the inkjet head 102. Subsequently, the medium P is discharged from the inkjet recording apparatus 1. In FIG. 1, a conveyance mechanism and a discharge mechanism up to the point where the medium P reaches the platen roller 106 are omitted.

The inkjet recording apparatus 1 shown in FIG. 1 includes a serial type of inkjet head, but it may alternatively include a line type of inkjet head. Additionally, the apparatus shown in FIG. 1 may include a roll-to-roll system where the leading edge of roll paper is wound by a winder. The serial type of inkjet head ejects the ink to record the image on the medium while reciprocating in the width direction of the medium. The line type of inkjet head is longer than the maximum width of the medium that the inkjet recording apparatus 1 is capable of recording, and the inkjet head is stable and does not reciprocate in the width direction. The inkjet recording apparatus equipped with the line type inkjet head performs recording by ejecting ink toward the medium from the inkjet head while conveying the medium.

The inkjet recording method of the present disclosure includes ejecting the aqueous ink from the inkjet head toward the medium to record an image on the medium. The inkjet recording method may be implemented using the inkjet recording apparatus of the present disclosure. The recording includes printing characters and images.

### (EXAMPLES)

Next, examples of the present disclosure will be described together with comparative examples. The present disclosure is not limited or restricted by the following examples and comparative examples.

### (Examples 1 through 13, Comparative Examples 1 and 2)

Ingredients excluding the phycocyanin as the colorant in an aqueous ink composition shown in Table 1 were uniformly mixed to obtain an ink solvent. Then, the colorant was added to the ink solvent, and the colorant and the ink solvent were mixed uniformly. A mixture with the colorant and the ink solvent (hereinafter, referred to "mixture") was filtered through a cellulose acetate-type membrane filter (pore size 3.00 µm) from TOYO ROSHI KAISHA, Ltd., to obtain aqueous inks for inkjet recording in Examples 1 through 13 and Comparative Examples 1 and 2, as shown in Table 1. Table 1 shows the colorant, the water-soluble organic solvent, the other (water and other water-soluble organic solvents), and the ratio (x/y) of the amount of the phycocyanin (x) to the amount of the water-soluble organic solvent (y). The other (water and other water-soluble organic solvents) is not limited only to water and other water-soluble organic solvents, and may contain the pH adjusters, the viscosity modifiers, the preservatives, the antifungal agents, and the like.

Each of the aqueous inks of Examples 1 through 13 and Comparative Examples 1 and 2 was evaluated for (a) particle size based on scattered light intensity (D95), (b) viscosity, and (c) particle size based on scattered light intensity of ink after evaporation (D95) using the methods described below.

### (a) Particle size based on scattered light intensity (D95)

For each aqueous ink of Examples 1 through 13 and Comparative Examples 1 and 2, the particle size based on scattered light intensity (D95) was measured. A measurement of the particle size based on scattered light intensity was performed a diluted solution prepared by adding pure water to the aqueous ink to achieve a colorant concentration of 0.1%, using a Dynamic Light Scattering Particle Size Analyzer (model: LB-550) from Horiba, Ltd. The particle size based on scattered light intensity (D95) was evaluated according to the criteria below.

### (Evaluation criteria of Particle size based on scattered light intensity (D95))

A: less than 1000 nm
B: 1000 nm or greater

Thakur, N., & Murthy, H. (2022). Simulation study of droplet formation in inkjet printing using ANSYS FLUENT. Journal of Physics: Conference Series, Vol.2161, No.1, p.012026 shows that the diameter of the particles in the ink is set to less than one tenth of the nozzle diameter as a method for avoiding clogging of the nozzles of the inkjet head. Therefore, for example, when an inkjet head having a nozzle diameter of 10 µm is used, the particle size based on scattered light intensity (D95) is preferably less than 1000 nm, which is one tenth of the nozzle diameter.

### (b) Viscosity

For each aqueous ink of Examples 1 through 13 and Comparative Examples 1 and 2, the viscosity was measured by a E-type viscometer (model: TVE25L) from Toki Sangyo Co., Ltd. The viscosity was evaluated according to the criteria below.

### (Evaluation criteria of Viscosity)

A: less than 10.0 mPa·s
B: 10.0 mPa·s or greater

### (c) Particle size based on scattered light intensity of ink after evaporation (D95)

5g of each aqueous ink of Examples 1 through 13 and Comparative Examples 1 and 2 was put into a Standard Reagent Bottle, No.2 (hereinafter, "test sample"). Next, the test samples were stored without lids in a constant temperature tank at 40°C for 6 hours. The particle size based on scattered light intensity (D95) of the test sample after storage was measured by the LB 550 Particle Size Analyzer for a diluted solution obtained by adding pure water to the test sample after storage to dilute the colorant concentration to 0.1%. The particle size based on scattered light intensity of ink after evaporation (D95) was evaluated according to the criteria below.

### (Evaluation criteria of particle size based on scattered light intensity of ink after evaporation (D95))

A: less than 1000 nm
B: 1000 nm or greater

Even if the particle size based on scattered light intensity (D95) is evaluated as "A", a case where the evaluation of the particle size based on scattered light intensity of ink after evaporation (D95) is "B" means that the particle size based on scattered light intensity of ink after evaporation (D95) becomes large. Therefore, it is necessary to provide a maintenance sequence for discharging the ink before the particle size based on scattered light intensity (D95) becomes large. In addition, for example, if an inkjet printer is used once or more in a week, it is difficult to be in the same situation as the ink after evaporation described in the evaluation method of "(c) particle size based on scattered light intensity of ink after evaporation (D95)". Therefore, even if the particle size based on scattered light intensity of ink after evaporation (D95) is evaluated as "B", as long as the particle size based on scattered light intensity (D95) is evaluated as "A", there is no problem in use. However, if the inkjet printer is used at a low frequency such as once a month or the like, the particle size based on scattered light intensity (D95) is likely to become large due to evaporation as compared with the use frequency of once or more in a week. Therefore, an ink for which the evaluation result of the particle size based on scattered light intensity of ink after evaporation (D95) is "A" is highly valuable for all users regardless of the use frequency of the inkjet printer. In particular, the ink for which the evaluation result of the particle size based on scattered light intensity of ink after evaporation (D95) is "A" is highly valuable for users who use the inkjet printer less frequently.

Example 1 through 13 and Comparative Example 1 through 2 aqueous ink compositions and evaluation results are shown in Table 1. Those of the log P are calculated according to the method disclosed in Wildman, Scott A., and Gordon M. Crippen (1999). Prediction of physicochemical parameters by atomic contributions, Journal of Chemical Information and Computer Sciences, Vol. 39, Issue 5, pp. 868-873, DOI: 10.1021/ci990307l.

As shown in Table 1, all the evaluation results of Examples 1 through 13 were evaluated as "B" or higher. In particular, the particle size based on scattered light intensity (D95) of Examples 1 through 13 all were evaluated as "A," indicating higher ejection stability compared to Comparative Examples 1 and 2 described below. Further each the particle size based on scattered light intensity of ink after evaporation (D95) of Examples 10 through 13 was evaluated as "B". However, even if the inkjet recording apparatus is used at least once a week using Examples 10 through 13, the condition of the ink after evaporation is unlikely to occur, so that there is no problem in use. On the other hand, both the particle size based on scattered light intensity (D95) and the particle size based on scattered light intensity of ink after evaporation (D95) of Examples 1 through 9 were evaluated as "A". Therefore Examples 1 through 9 are highly valuable ink to all users regardless of usage frequency of the inkjet recording apparatus and are highly valuable ink to users who operate the inkjet recording apparatus infrequently, such as once a month.

All evaluations of the particle size based on scattered light intensity (D95) and viscosity were "A" in Examples 1, 2, 4 through 11, and 13, in which the ratio (x/y) of the amount of the phycocyanin (x) to the amount of the water-soluble organic solvent (y) was 0.25 or greater and 2.00 or less.

The aqueous ink of each of Examples 1, 2, and 4 through 11 and 13 contained 5.00 wt% to 40.00 wt% of a water-soluble organic solvent relative to the total weight of the aqueous ink, and all of these examples received an "A" rating for both the particle size based on scattered light intensity (D95) and the viscosity. In addition, all evaluations of the particle size based on scattered light intensity (D95) and viscosity were "A" in Examples 1, 2, 4 through 11, and 13, which had the log P of -0.5000 or less.

All evaluations of the particle size based on scattered light intensity (D95), the particle size based on scattered light intensity of ink after evaporation (D95) and viscosity were "A" in Examples 4 through 9, which had the log P of -1.5000 or greater and -0.5000 or less and had the ratio (x/y) of the amount of the phycocyanin (x) to the amount of the water-soluble organic solvent (y) of 0.40 or greater and 2.00 or less. All evaluations of the particle size based on scattered light intensity (D95), the particle size based on scattered light intensity of ink after evaporation (D95) and viscosity were "A" in Examples 1 and 2, which had the log P of less than -1.5000 and had the ratio (x/y) of the amount of the phycocyanin (x) to the amount of the water-soluble organic solvent (y) of 0.25 or greater and 0.40 or less.

Meanwhile, Comparative Examples 1 and 2 which had the log P exceeding 0.2000 were in low ejection stability due to clogging the nozzle by a large particle size based on scattered light intensity (D95).

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents.

Some or all of the above-described embodiments and examples may also be described as follows, but are not limited thereto:
(1) An aqueous ink for inkjet recording comprising water, phycocyanin, and a water-soluble organic solvent, wherein the water-soluble organic solvent has a log P of 0.2000 or less, and wherein the log P is defined as a common logarithm of (octanol / water partition coefficient P).
(2) The aqueous ink for inkjet recording according to (1), wherein a ratio x to y is 0.20 or greater and 2.00 or less, and wherein x is an amount of the phycocyanin and y is an amount of the water-soluble organic solvent.
(3) The aqueous ink for inkjet recording according to (2), wherein the ratio is 0.25 or greater and 2.00 or less.
(4) The aqueous ink for inkjet recording according to (1), wherein an amount of the water-soluble organic solvent in the aqueous ink is 5.00 wt% or greater and 40.00 wt% or less.
(5) The aqueous ink for inkjet recording according to (3) or (4), wherein the log P in the aqueous ink is -0.5000 or less.
(6) The aqueous ink for inkjet recording according to (5), wherein the log P in the aqueous ink is -1.5000 or greater and -0.5000 or less, and wherein the ratio is 0.40 or greater and 2.00 or less.
(7) The aqueous ink for inkjet recording according to (5), wherein the log P in the aqueous ink is less than -1.5000, and wherein the ratio is 0.25 or greater and 0.40 or less.
(8) An inkjet recording apparatus comprising an inkjet head, wherein the inkjet head is configured to eject the aqueous ink according to any one of (1) through (7) toward a medium.
(9) An inkjet recording method comprising, ejecting the aqueous ink according to any one of (1) through (7) from an inkjet head toward a medium to record an image on the medium.

### (INDUSTRIAL APPLICABILITY)

As described above, according to the present disclosure, it is possible to provide the aqueous ink using phycocyanin as the colorant and exhibits excellent ejection stability from the plurality of nozzles. The aqueous ink, the inkjet recording apparatus, and the inkjet recording method of the present disclosure are widely applicable, for example, to variety of kinds of the inkjet recording on various media.

## Claims

1. An aqueous ink for inkjet recording comprising water, phycocyanin, and a water-soluble organic solvent,
wherein the water-soluble organic solvent has a log P of 0.2000 or less, and
wherein the log P is defined as a common logarithm of (octanol / water partition coefficient P).

2. The aqueous ink for inkjet recording according to claim 1,
wherein a ratio of x to y is 0.20 or greater and 2.00 or less, and
wherein x is an amount of the phycocyanin, and y is an amount of the water-soluble organic solvent.

3. The aqueous ink for inkjet recording according to claim 2,
wherein the ratio of x to y is 0.25 or greater and 2.00 or less.

4. The aqueous ink for inkjet recording according to claim 1,
wherein an amount of the water-soluble organic solvent in the aqueous ink is 5.00 wt% or greater and 40.00 wt% or less.

5. The aqueous ink for inkjet recording according to claim 3,
wherein the log P in the aqueous ink is -0.5000 or less.

6. The aqueous ink for inkjet recording according to claim 5,
wherein the log P in the aqueous ink is -1.5000 or greater and -0.5000 or less, and
wherein the ratio is 0.40 or greater and 2.00 or less.

7. The aqueous ink for inkjet recording according to claim 5,
wherein the log P in the aqueous ink is less than -1.5000, and
wherein the ratio is 0.25 or greater and 0.40 or less

8. An inkjet recording apparatus comprising an inkjet head,
wherein the inkjet head is configured to eject the aqueous ink according to claim 1 toward a medium.

9. An inkjet recording method comprising,
ejecting the aqueous ink according to claim 1 from an inkjet head toward a medium to record an image on the medium.
